# EUROPEAN PATENT APPLICATION

(11) **EP 1 524 823 A1**
(43) Date of publication of application: **20.04.2005**
(21) Application number: 03730638.8
(22) Date of filing: 27.05.2003
(51) Int. Cl.: H04M 1/03, H04R 1/00, H04R 1/02

(54) **PORTABLE TELEPHONE WITH BONE CONDUCTION SPEAKER**

(30) Priority: 29.05.2002 JP 2002154953
(71) Applicant: Temco Japan Co., Ltd., Tokyo 168-0062 (JP)
(72) Inventor: Fukuda, Mikio, Suginami-ku, Tokyo 168-0062 (JP)
(74) Representative: de Roquemaurel, Bruno
(86) International application number: PCT/JP2003/006595
(87) International publication number: WO 2003/101075

(57) **Abstract**

A cellular phone provided with a bone conduction speaker is **characterized by** its meatus closing means for closing an external acoustic meatus of a user's ear to enable the user to clearly catch sound issued from the bone conduction speaker even in a high-noisy environment without using any earplug, provided that the sound of the bone conduction speaker is set in pressure level so as to be slightly higher than sound issued from an ordinary air conduction speaker used in the current cellular phone. The closing means may be separately or integrally formed from or with the bone conduction speaker. In order to close an opening of the external acoustic meatus, the meatus closing means may be inserted into the external acoustic meatus or constructed of any means for pressing a tragus of the external acoustic meatus so as to close the opening of the external acoustic meatus.

## Description

### FIELD OF THE INVENTION

The present invention relates to a portable telephone or cellular phone provided with a bone conduction speaker.

### BACKGROUND OF THE INVENTION

It is effective to use a bone conduction speaker in communication conducted in a high-noisy environment in which: in order to catch sound, particularly voice sound in communication, the bone conduction speaker converts a signal of the voice sound into physical vibrations. In use, the bone conduction speaker is abutted against the user's temple in a condition in which an opening of the user's ear in his/her temple is not closed and therefore catches all the environmental noise. Due to this, a conventional type of the bone conduction speaker is disadvantageous in that its bone conduction sound is not sufficiently caught in a high-noise environment.

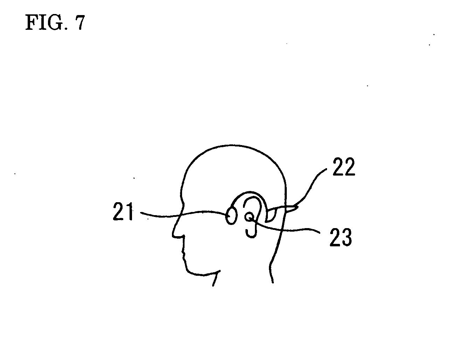

Consequently, it is considered to have a bone conduction speaker 21 abutted against the user's temple around his/her ear by means of a headband 22 in a condition in which an earplug 23 is used to close an opening of the external acoustic meatus (See Fig. 7).

In this case, however, since the earplug is separated from the bone conduction speaker, it is cumbersome for the user to separately carry the earplug with him/her together with the bone conduction speaker. Further, there is a fear that the earplug thus separately carried by the user tends to be lost. Still further, the earplug thus separately carried by the user is also disadvantageous in that: in order to avoid the earplug in mounting the bone conduction speaker, the bone conduction speaker fails to be abutted against its optimum position in which the bone conduction speaker may most effectively transmit its sound to the user. In other words, the bone conduction speaker fails to be positioned in the vicinities of the opening of the external acoustic meatus around the user's ear, and is therefore slightly spaced apart from the vicinities of the opening of the external acoustic meatus.

This type of conventional bone conduction speaker is also disadvantageous in that: when this type of conventional bone conduction speaker is used in a portable telephone or cellular phone, the phone's battery becomes poor in service life and therefore fails to supply a sufficient input power to the bone conduction speaker.

The present invention was made to solve the above disadvantages inherent in the prior art. Consequently, it is an object of the present invention to provide a portable telephone or cellular phone provided with a bone conduction speaker, wherein the cellular phone enables its user: to be free from the earplug which has beenheretofore separately carried by the user; and, to clearly catch the sound of the bone conduction speaker even in a high-noise environment in a condition in which the sound of the bone conduction speaker is set so as to be slightly higher in pressure level than sound issued from an ordinary air conduction speaker.

### SUMMARY OF THE INVENTION

In order to accomplish the object of the present invention, the portable telephone or cellular phone of the present invention provided with the bone conduction speaker is characterized in that the cellular phone of the present invention is provided with an external acoustic meatus closing means for closing the external acoustic meatus of the user together with the bone conduction speaker.

The external acoustic meatus closing means described above may be formed separately or integrally from or with the bone conduction speaker. The external acoustic meatus closing means may be inserted into the external acoustic meatus of the user or may be constructed of any means for pressing a tragus of the external acoustic meatus of the user so as to close the opening of the external acoustic meatus.

### BRIEF DESCRIPTION OF THE DRAWINGS

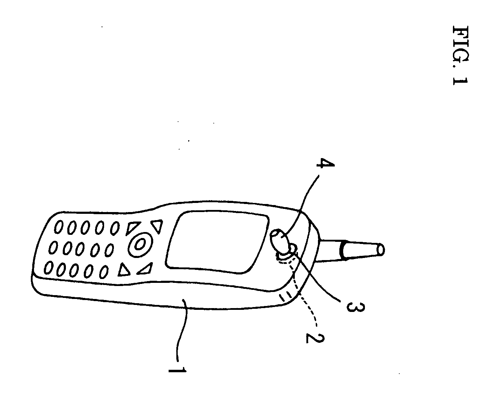

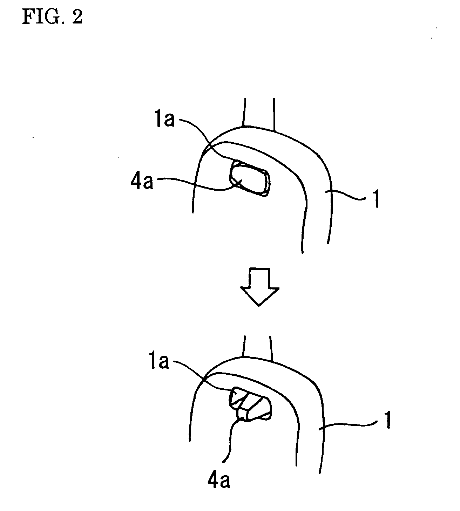

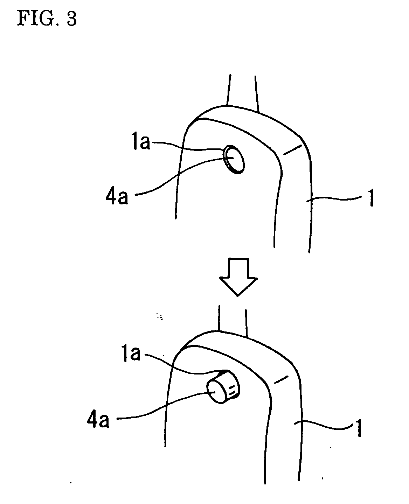

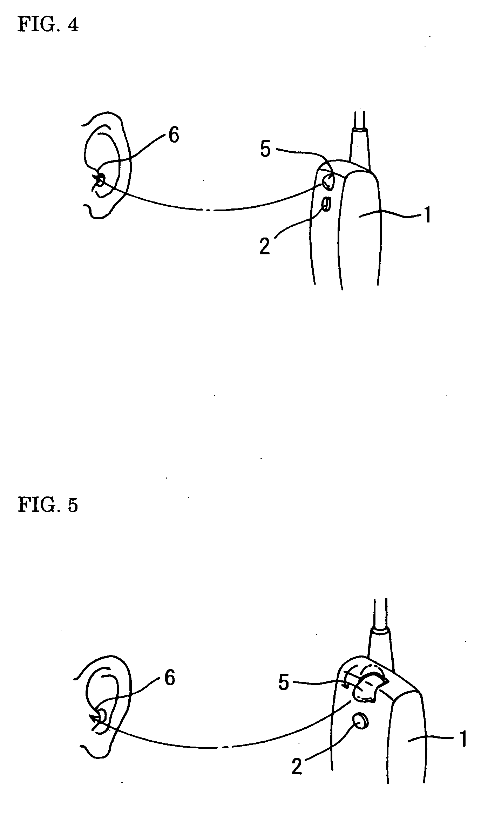

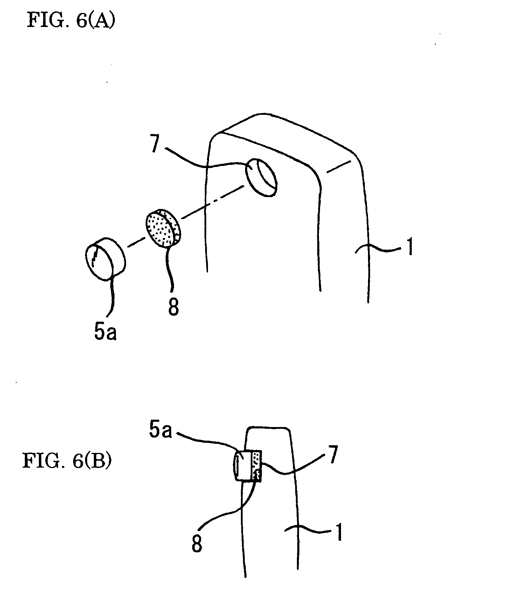

Fig. 1 is a perspective view of the portable telephone or cellular phone of the present invention provided with the bone conduction speaker, illustrating an example of the cellular phone in construction. Fig. 2 is perspective views of the cellular phone of the present invention provided with the bone conduction speaker, illustrating another example of the cellular phone in construction. Fig. 3 is perspective views of the cellular phone of the present invention provided with the bone conduction speaker, illustrating further another example of the cellular phone in construction. Fig. 4 is a perspective view of the cellular phone of the present invention provided with the bone conduction speaker, illustrating still further another example of the cellular phone in construction. Fig. 5 is a perspective view of the cellular phone of the present invention provided with the bone conduction speaker, illustrating another example of the cellular phone in construction. Fig. 6(A) is a perspective view of the cellular phone of the present invention provided with the bone conduction speaker, illustrating further another example of the cellular phone in construction. Fig. 6(B) is a partially sectional side view of the cellular phone of the present invention provided with the bone conduction speaker, illustrating the further another example of the cellular phone shown in Fig. 6(A) in construction. Fig. 7 is a view illustrating the conventional bone conduction speaker in use.

### BEST MODE FOR CARRYING OUT THE INVENTION

With reference to the accompanying drawings, embodiments of the present invention will be described. A portable telephone or cellular phone of the present invention is provided with both a bone conduction speaker and an external acoustic meatus closing means for closing an opening of the external acoustic meatus of a user, wherein: the bone conduction speaker and the external acoustic meatus closing means may be formed separately or integrally from or with each other.

Fig. 1 shows both the conduction speaker and the external acoustic meatus closing means in appearance, both of which are formed separately from each other. In this case, the bone conduction speaker 2 is incorporated in a main body of the cellular phone in a manner such that: the bone conduction speaker is located in a higher position than that of a display screen in a front surface of the main body 1 of the cellular phone; and, the external acoustic meatus closing means is constructed of an insertion member 4 and located generally in a central portion of a vibrating surface 3 of the bone conduction speaker 2. The insertion member 4 may be made of plastics or rubber, and may assume a suitable shape adapted to be inserted into the opening of the external acoustic meatus. Further, the insertion member 4 may be detachably attached to the vibrating surface 3 in a press fit manner, or threadably engaged with the vibrating surface 3, or detachably engaged with the vibrating surface 3 through any other fastening means. Further, it is also possible for the insertion member 4 to be attached to the vibrating surface 3 in a retractable manner on the vibrating surface 3, as is in the case of an insertion member 4a, which will be described later.

In use during communication, the user keeps the insertion member 4 of the cellular phone inserted in the opening of his/her external acoustic meatus. When the insertion member 4 is inserted into the user's external acoustic meatus, the vibrating surface 3 of the bone conduction speaker 2 is abutted against the user's concha encircled with the external acoustic meatus. As a result, the external acoustic meatus is closed by means of the insertion member 4. Due to this, any environmental sound or noise is shut out of the user' s tympanic membrane in a condition in which all the voice sound required by the user may be transmitted from the vibrating surface 3 to the user.

In any one of the portable telephones or cellular phones shown in Figs. 2 and 3, the bone conduction speaker is integrally formed with the external acoustic meatus closing means, wherein: the bone conduction speaker is incorporated in the insertion member 4a which serves as the external acoustic meatus closing means. In this case, in general, the entire side surface of the insertion member 4a serves as the vibrating surface.

The insertion member 4a is disposed in an upper portion of the front surface of the main body 1 of the cellular phone in a retractable manner on the front surface. When the insertion member 4a is extended outward from the front surface of the cellular phone, it is possible for the user to insert the insertion member 4a into his/her external acoustic meatus. Upon insertion of the insertion member 4a into the external acoustic meatus, the external acoustic meatus is closed so that the insertion member 4a is capable of transmitting its vibrations to the wall of the user's external acoustic meatus.

An example of means for retractably supporting the insertion member 4a will be described with reference to an embodiment shown in Fig. 2, wherein: the insertion member 4a has its base portion pivotally supported in a hole portion 1a of the main body 1 of the portable telephone or cellular phone in a manner such that a front end portion of the insertion member 4a is depressed from a rear surface of the main body 1 of the cellular phone, whereby the insertion member 4a is rotated in motion. Further, as shown in an embodiment shown in Fig. 3, it is also possible to employ another example of the means for retractably supporting the insertion member 4a, wherein: the insertion member 4a is provided with its dropping-off prevention means in its base portion, disposed in the hole portion 1a of the main body 1 of the cellular phone; and, extended outward from the rear surface of the main body 1 of the cellular phone in use.

In an embodiment show in Figs. 4 and 5: as the external acoustic meatus closing means, there is employed a tragus depressing means or member 5 for depressing the user's tragus 6 locating in front of an opening of the external acoustic meatus. In use, such depressing member 5 is not inserted into the opening of the external acoustic meatus, but depresses the tragus 6 of the user's ear to close the opening of his/her external acoustic meatus. The depressing member 5 is positioned slightly above the bone conduction speaker 2, has its concha abutting surface made of soft materials such as rubber or the like. The concha abutting surface of the depressing member 5 may assumes a flat or a curved shape.

The depressing member 5 is considerably lower in height than the insertion member 4a, and therefore does not form any obstacle. Due to this, it is possible for the cellular phone of the present invention to leave the depressing member 5 in its extended position (see Fig. 4). It is also possible to extend the depressing member 5 from the front surface of the main body 1 of the cellular phone only when the depressing member 5 is used, wherein: the depressing member 5 is retractably supported in the upper portion of the front surface of the main body 1 of the cellular phone. Means for retractably supporting the depressing member 5 may have a slidable/projectable construction in addition to any pivot (or push-out) construction such as that of the insertion member 4a (see Fig. 5).

In this embodiment, when the user's ear is abutted against the main body 1 of the cellular phone, the depressing member 5 having been extended may depress the tragus 6 of the user's ear to close the opening of the external acoustic meatus with the tragus 6. At the same time, the vibrating surface of the bone conduction speaker 2 is brought into close contact with the temple of the user in the vicinities of the opening of the user's external acoustic meatus. Due to this, the voice sound issued from the bone conduction speaker is capable of being transmitted to the user as a bone conduction sound.

As is in the case of the above-mentioned insertion member 4a, it is also possible to have the bone conduction speaker incorporated in the depressing member 5.

In an example shown in Fig. 6, the depressing member 5a in which the bone conduction speaker is incorporated is embedded in a concave portion 7 of the upper portion of the front surface of the main body 1 of the cellular phone through a cushion means or member 8 in a manner such that: the depressing member 5a slightly extends outward from the main body 1 of the cellular phone.

In this embodiment, the depressing member 5a is floated by means of the cushion member 8 to prevent vibrations from being transmitted to the main body 1 of the cellular phone. Due to this, the portable telephone or cellular phone of the present invention is substantially free from any howling problem. Further, since the cushionmember 8 is used in the cellular phone of the present invention, the cellular phone of the present invention is excellent in fittingness when pressed against the concha of the user's ear.

### INDUSTRIAL APPLICABILITY:

The effect of the present invention resides in the provision of the portable telephone or cellular phone, which has a construction as described above. Due to this, in the ordinary use of the cellular phone of the present invention, there is not required to separately carry an earplug for closing the user's ear. Consequently, it is possible for the cellular phone of the present invention to clearly transmit the voice sound of the bone conduction speaker to the user even in the high-noise environment, provided that the voice sound issued from the bone conduction speaker of the cellular phone of the present invention is slightly increased in pressure level more than the voice sound issued from the normal air conduction speaker.

## Claims

1. A cellular phone **characterized in that** the cellular phone is provided with an external acoustic meatus closing means together with a bone conduction speaker.

2. The cellular phone as set forth in claim 1, wherein said bone conduction speaker and said external acoustic meatus closing means for closing said external acoustic meatus are formed separately from each other.

3. The cellular phone as set forth in claim 1 or 2, wherein said external acoustic meatus closing means is detachably mounted on the main body of the cellular phone.

4. The cellular phone as set forth in claim 1 or 2, wherein said external acoustic meatus closing means is retractably mounted on the main body of the cellular phone.

5. The cellular phone as set forth in claim 4, wherein said external acoustic meatus closing means is made retractable when rotated relative to the main body of the cellular phone.

6. The cellular phone as set forth in any one of claims 1 to 5, wherein said external acoustic meatus closing means is inserted into the external acoustic meatus.

7. The cellular phone as set forth in any one of claims 1 to 5, wherein said external acoustic meatus closing means depresses a tragus of the ear to close an opening of the external acoustic meatus.

8. The cellular phone as set forth in claim 1, wherein said bone conduction speaker and said external acoustic meatus closing means are integrally formed with each other.

9. The cellular phone as set forth in claim 8, wherein: said external acoustic meatus closing means assumes a shape adapted to be inserted into the external acoustic meatus and brought into close contact therewith; and, said bone conduction speaker is incorporated in said external acoustic meatus closing means.

10. The cellular phone as set forth in claim 8, wherein: said external acoustic meatus closing means assumes a shape adapted for depressing said tragus of the ear to close an opening of the external acoustic meatus; and, said bone conduction speaker is incorporated in said external acoustic meatus closing means.

11. The cellular phone as set forth in claim 10, wherein said external acoustic meatus closing means is embedded in the main body of the cellular phone through a cushion member in a manner such that said external acousticmeatus closingmeans is slightly extended outward from said main body of the cellular phone.
